# EUROPEAN PATENT APPLICATION

(11) **EP 2 866 175 A1**
(43) Date of publication of application: **29.04.2015**
(21) Application number: 14189082.2
(22) Date of filing: 15.10.2014
(51) Int. Cl.: G06Q 10/00, B65G 1/02, G07F 7/06, G07F 9/02

(54) **Device for collecting articles**

(30) Priority: 16.10.2013 IT BO20130565
(71) Applicant: Indaco Project S.r.l., 40122 Bologna (IT)
(72) Inventor: Marzo, Antonio, 40010 Bentivoglio (IT)
(74) Representative: Puggioli, Tommaso

(57) **Abstract**

This invention relates to a device for collecting articles (2), preferably used articles (2) and in particular personal protective articles (2), which comprises detection means (3) for detecting each article (2) inserted in the device (1) and a computerised unit (4) in communication with the detection means (3); in particular, the detection means (3) are designed to generate an identification signal (5) for identifying a respective article (2) inserted and to send the identification signal (5) to the computerised unit (4).

## Description

This invention relates to a device for collecting articles.

In particular, this invention relates to a device for collecting used articles, that is to say, articles which must be collected so that they can be disposed of as waste or recycled for new use, such as "PPE" (Personal Protective Equipment).

It is known that in metalworking and mechanical engineering companies each sector operator is provided with respective personal protective equipment or articles, known as "PPE", to protect operator safety in the workplace. For example, the most widely used personal protective equipment is protective gloves, safety footwear, overalls, masks, goggles and ear defenders.

Generally, used personal protective equipment which needs to be disposed of as waste or recycled for new use is placed in a suitable collection area by the operator to whom it was supplied.

At present, management of the used articles collection areas is particularly onerous and has particularly high management costs for companies whose operators need personal protective equipment.

In this context the need is felt for improved management of the collection of articles, particularly used articles, in order to at the same time reduce the related management costs.

One aspect of this invention is that of providing a device for collecting articles, preferably used articles and in particular personal protective articles, which comprises detection means for detecting each article inserted in the device and a computerised unit in communication with the detection means; the detection means are designed to generate an identification signal for identifying a respective article inserted and to send the identification signal to the computerised unit.

Advantageously, each article inserted in the device for collecting articles is identified by the detection means which generate a respective identification signal which is sent to a computerised unit so that it can potentially be processed.

The possibility of converting the manual gesture of inserting an article in the device for collecting articles into respective virtual information managed by a computerised unit significantly increases collection management potential, cutting costs compared with the prior art.

Further features and advantages of the invention are more apparent in the description below, with reference to a preferred, non-limiting embodiment of a device for collecting articles as illustrated in the accompanying drawings, in which:

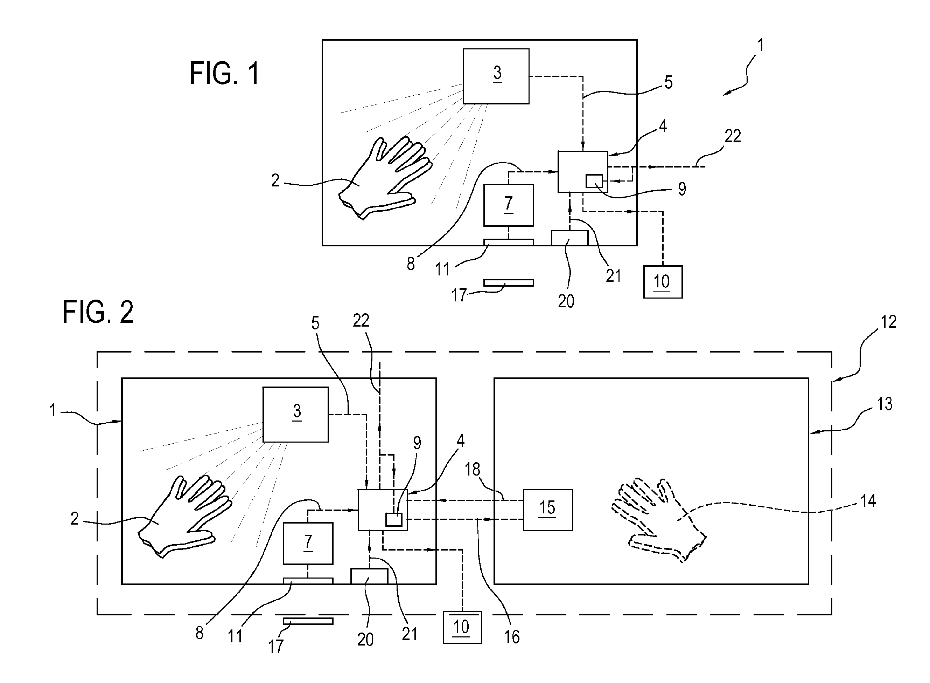

- Figure 1 is a schematic block diagram of a device for collecting articles according to this invention;
- Figure 2 is a schematic block diagram of a unit for managing articles comprising the device for collecting articles according to this invention.

The numeral 1 denotes a device for collecting articles 2.

Preferably, the device 1 is a device for collecting used articles 2 and in particular personal protective articles.

In this description, the term used article 2 means an article which must be disposed of as waste or recycled for new use after it has been used.

By way of example, but without limiting the scope of the invention, the accompanying drawings show a pair of gloves as an example of an article 2 inserted in the device 1.

The device 1 comprises one or more compartments, not illustrated, for housing the article 2 to be inserted.

The device 1 comprises detection means 3 for detecting each article 2 inserted in the device 1 and a computerised used 4 in communication with the detection means 3.

The detection means 3 are designed to generate an identification signal 5 identifying a respective article 2 and to send the identification signal 5 to the computerised unit 4.

The computerised unit 4 is designed to receive the identification signal 5 from the detection means 3.

In the preferred embodiment, the detection means 3 are of the optical type.

In particular, the detection means 3 comprise at least one camera.

The detection means 3 capture at least one image 6 of the respective article 2 inserted in the device 1.

In this sense, the identification signal 5 comprises identification information defined by the image 6 of the article 2.

Preferably, the image 6 is a photograph of the article 2 inserted in the device 1.

In other words, each time an article 2 is inserted in the device 1, the camera 3 takes a photograph 6.

The photograph 6 is information for identification of the article 1 which is sent to the computerised unit 4.

In an alternative embodiment, the detection means 3 are character recognition means also known as "OCR" (Optical Character Recognition) means.

Advantageously, the device 1 holds identification information for each article 2 inserted in it, even if the articles 2 are of different types.

In this way, it is possible to track how many and which articles 2 have been inserted in the device 1.

The device 1 comprises means 7 for identifying the user who inserts the article 2 in the device 1.

The identification means 7 are designed to send a user recognition signal 8 to the computerised unit 4.

In the preferred embodiment illustrated, the identification means 7 are based on RFID (Radio Frequency Identification) technology.

In particular, the identification means 7 comprise recognition means 17 which can be associated with the operator and reading means 11 controlled by the computerised unit 4, for reading at least the recognition means 17.

In the preferred embodiment illustrated, the identification means 7 are based on substantially known RFID (Radio Frequency Identification) technology.

Advantageously, RFID technology also allows the recognition means 17 to be made as a badge.

In that embodiment, the recognition means 17 comprise a magnetic badge and the reading means 11 a corresponding reader.

Alternatively, the recognition means comprise, for example, an electronic tag, not illustrated, and the reading means 11 a proximity antenna for reading said tag.

Advantageously, the computerised unit 4 is designed for associating the user recognition signal 8 with the respective identification signal 5 identifying the article 2 inserted in the device 1.

In this way, it is possible to track how many and which articles 2 an individual user has inserted in the device 1.

Advantageously, the computerised unit 4 comprises a memory 9 for recording the identification signals 5 and/or the recognition signal 8 associated with the respective identification signal 5 identifying the article 2.

The memory 9 of the computerised unit 4 allows, even when some time has gone by, retrieval of the identification signals 5 identifying the articles 2 and the user recognition signals 8 associated with the respective identification signal 5 identifying the article 2.

In fact, it should be noticed that the identification signals 5 identifying the articles 2 and/or the recognition signals 8 associated with the respective identification signal 5 identifying the article 2 may be processed from the moment when the computerised unit 4 receives said signals 5, 8 or may be saved in the memory 9 of the computerised unit 4 for processing at a later stage.

In one embodiment, a dedicated operator is in communication with the computerised unit 4 for processing the identification signals 5 identifying the articles 2 and/or the recognition signals 8 associated with the respective identification signal 5 identifying the article 2.

For that purpose, the computerised unit 4 is in communication with a communication network 10.

The expression communication network 10 means a network for remote connection of the computerised unit 4 or, alternatively, an internet, wireless or remote connection network.

The communication network 10 advantageously allows the operator to process the signals 5, 8 from a different workstation than the location of the device 1.

The device 1 comprises means 20 for the entry of data about the article 2 to be inserted in the device 1 designed to generate an insertion signal 21 corresponding to the type of article 2 inserted in the device 1.

The computerised unit 4 is designed to receive the insertion signal 21. The data entry means 20 allow the user to declare what type of article 2 he is inserting in the device 1, preferably depending on the user recognition signal 8, on the basis of which the insertion signal 21 is generated. Preferably, the data entry means 20 are in the form of a touchscreen which is in communication with the computerised unit 4.

Preferably the unit 4 is designed to show the user, for example by means of the touchscreen, a plurality of returnable articles 2 from which the user can select, using the data entry means 20, the type he intends to insert. Advantageously, the unit 4 is designed to show the user the plurality of returnable articles 2 depending on the user recognition signal 8.

The computerised unit 4 is preferably designed to compare the identification signal 5 identifying the article 2 with the respective insertion signal 21.

In this way, it is possible to check of the user has actually inserted in the device 1 an article 2 of the same type as the article 2 declared using the data entry means 20.

The computerised unit 4 is preferably designed to generate an alert signal 22 if the identification signal 5 identifying of the article 2 does not correspond to the respective insertion signal 21.

Advantageously, the computerised unit 4 issues the alert signal 22 if it detects that the user has inserted in the device 1 an article 2 which is different from the type of article 2 declared.

The unit 4 is designed to send the alert signal 22, indicating no match between the article inserted and the article declared, to an operator who is a supervisor of the device 1.

The unit 4 is preferably designed to save the alert signal 22, for example in the memory 9.

This invention also relates to a unit 12 for the management of articles 2 comprising a device 1 for collecting articles 2 and at least one dispenser 13 of second articles 14.

The second articles 14 are preferably new articles, or unused articles made by recycling a corresponding used article.

In particular, the second articles 14 are personal protective articles.

The device 1 and the dispenser 13 may advantageously be positioned in a single housing or in separate housings.

In the preferred embodiment, the dispenser 13 is logically connected to the device 1 for collecting articles.

The dispenser 13 comprises a second computerised unit 15 in communication with the computerised unit 4 of the device 1, the latter also referred to as the first computerised unit 4 of the device 1.

In particular, the first and the second computerised units 4 and 15 are a single unit.

The first computerised unit 4 is designed to generate a command signal 16 for the dispenser 13 for dispensing a respective second article 14, depending on the user recognition signal 8.

The second computerised unit 15 is designed to receive the command signal 16 for the dispenser 13 from the first computerised unit 4.

In other words, associated with the user recognition signal 8 detected by the device 1 there is at least one respective second article 2 which is dispensed by the dispenser 13.

In use, the user may obtain from the dispenser 13 only predetermined second articles 14, for example the pair of gloves 2 illustrated in the accompanying drawings, depending on his job, associated with the user recognition signal 8.

Advantageously, the user recognition signal 8 received by the first computerised unit 4 of the device 1 is also used for dispensing a respective second article 14 by means of the dispenser 13.

In this way, the user is authorised to obtain from the dispenser 13 a second article 14 chosen from the second articles 14 associated with the user recognition signal 8, depending on his job.

The first computerised unit 4 is designed to generate the command signal 16 for the dispenser 13 depending on the identification signal 5 identifying the article 2 or the first article 2 inserted in the device 1.

The dispenser 13 dispenses a second article 14 of the same type as the article 2 inserted in the device 1 by the user, based on the identification signal 5.

Advantageously, the dispenser 13 dispenses to the user a new second article 14 of the same type as the used article 2 inserted in the device 1.

In an alternative embodiment, the second article 14 is dispensed by the dispenser 13 before the user has returned the first article 2 to the device 1 for collecting articles.

In such a case, the second computerised unit 15 is designed to generate an identification signal 18 identifying the second article 14 dispensed by the dispenser 13.

The second computerised unit 15 is designed to send the identification signal 18 to the first computerised unit 4.

Advantageously, it is possible to track the used articles 2 which a user must return to the device 1 for collecting articles, depending on the second articles 14 obtained from the dispenser 13.

This invention also relates to a method for the management of articles, in particular of personal protective articles.

The method comprises a step of detecting each article 2 inserted in the device 1, a step of generating a respective identification signal 5 identifying the respective article 2 inserted, and a step of sending the identification signal 5 to a computerised unit 4, designed to receive said identification signal 5.

The step of detecting each article 2 inserted in the device 1 comprises a step of capturing at least one image 6 of the article 2.

The identification signal 5 is defined by the image 6.

The method comprises a step of identifying the user who inserts the article 2 in the device 1, generating a recognition signal 8, and a step of sending the recognition signal 8 to the computerised unit 4 of the device 1.

The method comprises a step of associating the user recognition signal 8 with the respective identification signal 5 identifying the article 2 inserted in the device 1.

The method comprises a step of saving the identification signal 5 identifying the article 2 inserted in the device 1 and/or the user recognition signal 8 associated with the respective identification signal 5 identifying the article 2.

The method comprises a step of sending a command signal 16 for dispensing second articles 14, preferably new articles and in particular personal protective articles, in particular depending on the user recognition signal 8 and/or depending on the identification signal 5 identifying the article.

According to a first embodiment, the step of sending the command signal 16 for dispensing second articles 14 comes after the step of detecting each article inserted in the device 1.

According to a second embodiment, the step of sending the command signal 16 for dispensing second articles 14 comes before the step of detecting each article 2 inserted in the device 1.

The method comprises a step of dispensing a second article 14 of the same type as the article 2 inserted in the device 1 by the user, in particular depending on the user recognition signal 8 and/or depending on the identification signal 5 identifying the article 2.

The method comprises a step of entering an insertion signal 21 corresponding to the type of article 2 inserted in the device 1, a step of comparing the identification signal 5 identifying the article 2 with the respective insertion signal 21 and of generating an alert signal 22 if the identification signal 5 identifying the article 2 does not correspond to the respective insertion signal 21.

Advantageously, according to this invention, the user returns the used article 2 to the device 1 and obtains from the dispenser 13 a respective second article 14, preferably of the same type as the used article 2 returned.

Advantageously, the identification of the user allows a check of the correct insertion of the articles 2 in the device 1 for collecting articles, that is to say, for example, a user with a predetermined job returns the used articles 2 which were supplied to him.

Advantageously, it is possible to check that the user returns the used article 2 which he declared using the data entry means 20.

Alternatively, the user obtains from the dispenser 13 a respective second article 14 before returning the first article 2 to the device 1.

Advantageously, the device 1 keeps track of every article 2 inserted and of the articles 2 to be inserted depending on the second articles 14 obtained from the dispenser 13, in the embodiment in which it is connected to the dispenser 13 forming said unit 12 for the management of articles.

## Claims

1. A unit for the management of articles, **characterised in that** it comprises a device (1) for collecting articles (2) comprising
detection means (3) for detecting each article (2) inserted in the collecting device (1) and a computerised unit (4) in communication with the detection means (3); the detection means (3) being designed to generate an identification signal (5), preferably comprising identification information defined by an image (6), of a respective article (2) inserted and to send the identification signal (5) to the computerised unit (4), said collecting device (1) comprising means (7) for identifying a user who inserts the article (2) in the collecting device (1) designed to send a user recognition signal (8) to the computerised unit (4), said computerised unit (4) being designed to associate the user recognition signal (8) with the respective identification signal (5) identifying the article (2) inserted in the collecting device (1), said unit comprising
at least one dispenser (13) for dispensing second articles (14), preferably new articles and in particular personal protective articles, logically connected to the device (1) for collecting articles (2), the dispenser (13) comprising a second computerised unit (15) in communication with the first computerised unit (4) of the collecting device (1); the first and second computerised units (4, 15) preferably being a single unit,
said second computerised unit (15) being designed to generate a command signal (16) for the dispenser (13) for dispensing a respective second article (14), depending on the user recognition signal (8) and depending on the identification signal (5) identifying the article (2) inserted in the collecting device (1), said unit being **characterised in that** said user recognition signal (8) comprises information about a job of said user, the user being authorised to obtain from the dispenser (13) a second article (14) chosen from the second articles (14) associated with the user recognition signal (8), depending on his job.

2. The unit according to claim 1, **characterised in that** said collecting device (1) comprises means (20) for the entry of data about the article (2) to be inserted in the collecting device (1) designed to generate an insertion signal (21) corresponding to the type of article (2) inserted in the collecting device (1).

3. The unit according to claim 2, **characterised in that** the first computerised unit (4) is designed to compare the identification signal (5) identifying the article (2) inserted in the collecting device (1) with the respective insertion signal (21) to check if the user has inserted in the collecting device (1) an article (2) of the same type as the article (2) declared using the data entry means (20).

4. The unit according to claim 2 or 3, **characterised in that** the first computerised unit (4) is designed to show the user a plurality of types of articles (2) to be inserted, from which the user, using the data entry means (20), selects the type of article (2) he intends to insert.

5. The unit according to claim 4, **characterised in that** the first computerised unit (4) is designed to show the user the plurality of articles (2) to be inserted in the collecting device (1) depending on a user recognition signal (8).

6. The unit according to any one of claims 2 to 5, **characterised in that** the first computerised unit (4) is designed to generate an alert signal (22) if the identification signal (5) identifying of the article (2) inserted in the collecting device (1) does not correspond to the respective insertion signal (21), said first computerised unit (4) being in particular designed to issue the alert signal (22) if it detects that the user has inserted in the collecting device (1) an article (2) which is different from the type of article (2) declared.

7. The unit according to claim 6, **characterised in that** the first computerised unit (4) is designed to send the alert signal (22), indicating no match between the article inserted and the article declared, to an operator who is a supervisor of the collecting device (1).

8. The unit according to claim 1, **characterised in that** the dispenser (13) dispenses a second article (14) of the same type as the article (2) inserted in the collecting device (1) by the user, in particular depending on the user recognition signal (8) and/or depending on the identification signal (5) identifying the article (2).

9. A method for the management of articles, in particular of personal protective articles, comprising
a step of detecting each article (2) inserted in a collecting device (1),
a step of generating a respective identification signal (5) identifying a respective article (2) inserted in the collecting device (1),
a step of sending the identification signal (5) to a computerised unit (4), which is designed to receive said identification signal (5), the step of detecting each article (2) inserted in the device (1) comprising a step of capturing at least one image (6) of the article (2); the identification signal (5) being defined by said image (6), said method comprising a step of identifying a user who inserts the article (2) in the collecting device (1), generating a user recognition signal (8), a step of sending the recognition signal (8) to the computerised unit (4), a step of associating the user recognition signal (8) with the respective identification signal (5) identifying the article (2) inserted in the device (1), a step of saving the identification signal (5) identifying the article (2) inserted in the device (1) and/or the user recognition signal (8) associated with the respective identification signal (5) identifying the article (2),
a step of sending a command signal (16) for dispensing second articles (14), preferably new articles and in particular personal protective articles, in particular depending on the user recognition signal (8) and/or depending on the identification signal (5) identifying the article (2) inserted in the device (1), to a dispenser (13) of the second articles (14),
a step of dispensing a second article (14) of the same type as the article (2) inserted in the device (1) by the user, in particular depending on the user recognition signal (8) and/or depending on the identification signal (5) identifying the article (2) inserted in the device (1), said method being **characterised in that** said user recognition signal (8) comprises information about a job of said user, the user being authorised to obtain from the dispenser (13) a second article (14) chosen from the second articles (14) associated with the user recognition signal (8), depending on his job.

10. The method according to claim 9, **characterised in that** it comprises a step of entering an insertion signal (21) corresponding to the type of article (2) inserted in the device (1).

11. The method according to claim 10, **characterised in that** it comprises a step of comparing the identification signal (5) identifying the article (2) inserted in the collecting device (1) with the respective insertion signal (21) to check if the user has inserted in the collecting device (1) an article (2) of the same type as the article (2) declared.

12. The method according to claim 11, **characterised in that** it comprises a step of generating an alert signal (22) if the identification signal (5) identifying the article (2) inserted in the collecting device (1) does not correspond to the respective insertion signal (21), said method comprising in particular a step of issuing the alert signal (22) if the user has inserted in the collecting device (1) an article (2) which is different from the type of article (2) declared.

13. The method according to claim 12, **characterised in that** it comprises a step of sending the alert signal (22), indicating no match between the article inserted and the article declared, to an operator who is a supervisor of the collecting device (1).

14. The method according to claim 10, **characterised in that** it comprises a step of showing the user a plurality of types of articles (2) to be inserted and a step of selection of at least one of said types.

15. The method according to claim 14, **characterised in that** said showing step comprises said step of identifying the user.
